# EUROPEAN PATENT SPECIFICATION

(11) **EP 4 430 496 B1**
(45) Date of publication and mention of the grant of the patent: **13.08.2025**
(21) Application number: 21964228.7
(22) Date of filing: 10.11.2021
(51) Int. Cl.: G06F 21/55, G06F 21/60, G06N 5/02, G06N 20/00

(54) **PROTECTING A MODEL AGAINST AN ADVERSARY**
SCHUTZ EINES MODELLS VOR EINER GEGNERISCHEN UMGEBUNG
PROTECTION D'UN MODÈLE CONTRE UN ADVERSAIRE

(43) Date of publication of application: 18.09.2024
(73) Proprietor: Telefonaktiebolaget LM Ericsson (publ), 164 83 Stockholm (SE)
(72) Inventor: KIM, Seonghyun, 120 60 Årsta (SE); LILJENSTAM, Michael, Sunnyvale, CA 94087 (US); STERNBY, Jakob, 223 55 Lund (SE); BARRIGA, Luis, 16940 Solna (SE)
(74) Representative: Ericsson
(86) International application number: PCT/SE2021/051126
(87) International publication number: WO 2023/085984

(56) References cited:
- US-A1- 2019 050 564
- US-A1- 2020 019 699
- US-A1- 2020 104 673
- US-A1- 2020 134 391
- US-A1- 2020 234 184
- US-A1- 2020 387 752
- US-A1- 2021 326 748
- SANJAY KARIYAPPA ET AL: "Defending Against Model Stealing Attacks with Adaptive Misinformation", ARXIV.ORG, CORNELL UNIVERSITY LIBRARY, 201 OLIN LIBRARY CORNELL UNIVERSITY ITHACA, NY 14853, 16 November 2019 (2019-11-16), XP081534014
- HE YINGZHE; MENG GUOZHU; CHEN KAI; HU XINGBO; HE JINWEN: "Towards Security Threats of Deep Learning Systems: A Survey", IEEE TRANSACTIONS ON SOFTWARE ENGINEERING., IEEE SERVICE CENTER, LOS ALAMITOS, CA., US, vol. 48, no. 5, 9 November 2020 (2020-11-09), US , pages 1743 - 1770, XP011908530, ISSN: 0098-5589, DOI: 10.1109/TSE.2020.3034721

## Description

### TECHNICAL FIELD

This disclosure relates to a method, apparatus, a computer program, a carrier and a computer program product. More particularly but non-exclusively, the disclosure relates to protecting a machine learning model that is queryable over an application programming interface, API, against an adversary querying the first machine learning model through the API in order to build up a database of query-response pairs.

### BACKGROUND

Machine Learning (ML) is an approach that allows a programmer to implement a program by finding patterns in data samples. A program that is obtained through Machine Learning is called a Machine Learning model. The model can be used in various analysis tasks, for example classification or regression. A dataset of samples used to build the model is also known as a training set. The model parameters and data samples are mostly confidential while source code for training and execution of Machine Learning models is increasingly becoming available as open source. As such, high quality data samples are often the most valuable commodity in ML. Software that has a Machine Learning model as one of its core modules is called an ML-assisted service. The Machine Learning model that is deployed to a ML-assisted service is called the deployed model.

A model extraction adversary is an adversary (or "attacker") aiming to replicate the functionality of a deployed model inside an ML-assisted service. This type of attack, also known as a model extraction attack, does not aim to exploit software vulnerabilities. Rather, adversaries query the model over an exposed API in the same way as authorized users, the difference being that the adversary makes a great many queries in order to build up a dataset of query-response pairs with which to train a new model. In this way, an attacker can effectively steal the underlying dataset used to train the model and generate a training dataset for free.

Motivations of an attacker can be to replicate the model, so as to be able to use it for free, sell it on, or for further improvement for other purposes. The goal of an adversary may go beyond model replication. The replicated model can also be used as a stepping stone for data reconstruction, also known as a model inversion attack, or in a testbed for evasion attacks looking for vulnerabilities in the functioning of the deployed model in an ML-assisted service.

There are various known methods to address different aspects of extraction attacks. For example, an attacker can be distinguished from an ordinary (genuine) user of an API through abnormal query detection. This method analyzes successive queries from users and consequently identifies suspicious queries. See the paper by Juuti, Mika, et al. (2019) entitled "PRADA: protecting against DNN model stealing attacks." IEEE European Symposium on Security and Privacy (EuroS&P), IEEE, 2019.

Extraction progress, e.g. the proportion of the feature space that has been made available to the user through query-response pairs, can also be estimated. The goal of this monitoring method is to detect an adversary by estimating extraction progress. This is described in the paper by Kesarwani, Manish, et al. (2018) entitled "Model extraction warning in mlaas paradigm." Proceedings of the 34th Annual Computer Security Applications Conference. 2018.

Another technique is dimensionality reduction. The purpose of this preventive method is to limit the degrees of freedom available to an adversary by reducing the number of input features to the model. This is described in the paper by Arjun Nitin Bhagoji, Daniel Cullina, and Prateek Mittal, entitled: "Enhancing Robustness of Machine Learning Systems via Data Transformations" arXiv preprint 1704.02654, 2017.

Another mitigation technique is perturbation-based defense whereby outputs of a model are offset or perturbed before being sent to the user. This approach aims to preserve accuracy while truncating the output information. See paper by Tramer, F., Zhang, F., Juels, A., Reiter, M. K., & Ristenpart, T. (2016) entitled, "Stealing machine learning models via prediction APIs"; 25th USENIX Security Symposium (USENIX Security 16) (pp. 601-618).

Another technique is to watermark the output. This method aims to prove ownership of a model by detecting watermarks on suspicious models. See paper by Szyller, Sebastian, et al. entitled "Dawn: Dynamic adversarial watermarking of neural networks." arXiv preprint arXiv:1906.00830 (2019).

Another technique is describe in the paper by Sanjay Kariyappa, Moinuddin K Qureshi entitled "Defending Against Model Stealing Attacks with Adaptive Misinformation" (2019) wherein the defense involves flagging "suspicious" queries and adaptively servicing these queries with incorrect predictions from an auxiliary "misinformation model" which produces uncorrelated predictions.

### SUMMARY

Extraction attacks aim to extract information from an ML model through selective querying in order to build up a database of query-response pairs. There are various problems associated with the known techniques described in the background for managing extraction attacks, for example, none provide a solution in a potentially harmful situation, for example where an extraction attack is suspected but not yet confirmed.

The preventive, monitoring, mitigation or detection approaches described in the background section are rather designed for use in either on-going monitoring of a normal situation or a failed situation where a user is confirmed as being an adversary. However, taking an appropriate reactive action in a potentially harmful (but unconfirmed) situation is not a trivial problem. The service cannot just be stopped in this situation since a detection technique may eventually (erroneously) flag a non-malicious user as malicious over time simply because enough information to replicate the model could have been collected by the user if they use the service for long enough. This would be a false positive alert and if it is used to block access to the Machine Learning model, it would lead to negative consequences such as service disruption.

Furthermore, "normal query" patterns can be difficult to detect because they tend to vary between customers. Moreover, abnormal query detection methods need to take the context into account to determine if queries detected by the method are sent from attackers or not, since the root cause for those queries might be actual software defects or hardware malfunctions on a network node and not model extraction attacks. Therefore, flagging attackers based on query detection patterns alone is not always helpful in a potentially harmful situation.

Estimations of extraction progress are designed for use in a normal situation but do not address the issue of how to react to a suspected model extraction adversary.

Dimensionality Reduction cannot claim to mitigate, but rather only marginally delay, an attack by increasing the number of queries that would be required to replicate the model. It also sacrifices accuracy if the method is applied only for model extraction defense, not for data refinement.

Perturbation-based defenses are still vulnerable to attacks, despite being capable of delaying an attack. Moreover, this mitigation approach can be detected by adversaries. Users of an ML-based service may even request that this approach is avoided, with valid reasons.

Lastly, watermarking only works after an attack has successfully extracted the model. It is also based on the strong assumption that the owner can detect infringement and that the attackers will open the replicated models to be audited. A watermark can be hard to find and may not be replicated in a model trained using data obtained through an extraction attack. In other words, only a true copy ensures that a watermark is transferred to a stolen model. Moreover, adversaries who anticipate watermarking defenses can take steps to prevent detection, such as double extraction and fine-tuning.

It is an object of the invention herein to improve the security of ML models exposed over APIs such as those in ML-assisted services.

Thus, according to a first aspect herein there is a method for use in protecting a first machine learning model that is queryable over an application programming interface, API, against an adversary querying the first machine learning model through the API in order to build up a database of query-response pairs. The method comprises identifying a user of the API as a potential adversary; and in response to a query from the potential adversary, through the API, providing a response from a second machine learning model instead of the first machine learning model, wherein the first machine learning model has been trained on a first dataset and wherein the second machine learning model has been trained on a second dataset that is different to the first dataset.

According to a second aspect there is an apparatus for use in protecting a first machine learning model that is queryable over an application programming interface, API, against an adversary querying the first machine learning model through the API in order to build up a database of query-response pairs. The apparatus comprises: a memory comprising instruction data representing a set of instructions; and a processor configured to communicate with the memory and to execute the set of instructions. The set of instructions, when executed by the processor, cause the apparatus to: identify a user of the API as a potential adversary; and in response to a query from the potential adversary, through the API, provide a response from a second machine learning model instead of the first machine learning model, wherein the first machine learning model has been trained on a first dataset and wherein the second machine learning model has been trained on a second dataset that is different to the first dataset.

According to a third aspect there is an apparatus for use in protecting a first machine learning model that is queryable over an application programming interface, API, against an adversary querying the first machine learning model through the API in order to build up a database of query-response pairs. The apparatus is configured to: identify a user of the API as a potential adversary; and in response to a query from the potential adversary, through the API, provide a response from a second machine learning model instead of the first machine learning model, wherein the first machine learning model has been trained on a first dataset and wherein the second machine learning model has been trained on a second dataset that is different to the first dataset.

According to a fourth aspect there is a computer program comprising instructions which, when executed on at least one processor, cause the at least one processor to carry out a method according to the first aspect.

According to a fifth aspect there is a carrier containing a computer program according to the fourth aspect, wherein the carrier comprises one of an electronic signal, optical signal, radio signal or computer readable storage medium.

A computer program product comprising non transitory computer readable media having stored thereon a computer program according to the fourth aspect.

Thus, described herein are apparatus and methods that can be used to protect a first machine learning model that is exposed over an API, against a suspected extraction attack, whilst still providing a service to a user. When a user is identified as a suspected adversary, instead of continuing to service requests from the user, in the normal way, a second, different, model is used instead. The second model is trained on different training data. This way, the first model is protected as it is no longer made available to the user, however service is still provided to the user which prevents service interruption.

As will be described in more detail below, the second model can take many forms, but in some embodiments, can be trained using previous query-response pairs requested by the user. In this example, the user can still obtain accurate responses for queries that are similar to their previous queries, but can be prevented from extracting further information from the first model. Thus, service is maintained to the user whilst protecting the first model.

### BRIEF DESCRIPTION OF THE DRAWINGS

For a better understanding and to show more clearly how embodiments herein may be carried into effect, reference will now be made, by way of example only, to the accompanying drawings, in which:
Fig. 1 illustrates an example apparatus according to some embodiments herein;
Fig. 2 illustrates an example method according to some embodiments herein;
Fig. 3 illustrates an example apparatus according to some embodiments herein;
Fig. 4 illustrates some example defense policy rules according to some embodiments herein;
Fig. 5 shows a flowchart illustrating an example method according to some embodiments herein;
Fig. 6 shows a flowchart illustrating an example method according to some embodiments herein;
Fig. 7 illustrates an example a carrier containing a computer program; and
Fig. 8 shows an example a computer program product.

### DETAILED DESCRIPTION

The disclosure herein relates to methods and apparatus for protecting (e.g. restricting access to or use of) a first machine learning model (e.g. a first model trained using a machine learning process) that is deployed and made available over an API, for example, as part of an ML-assisted service.

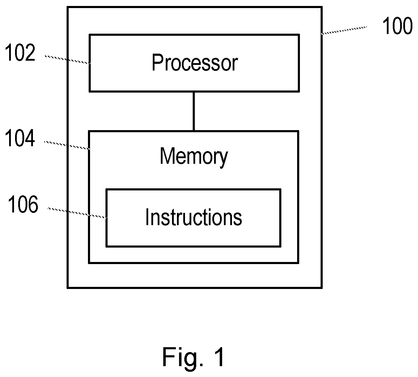

Fig.1 shows an example apparatus 100 that may be used to protect a first machine learning model according to some embodiments herein. The apparatus 100 is configured (e.g. adapted, operative, or programmed) to perform any of the embodiments of the method 200 as described below.

The apparatus 100 herein comprises a processor (e.g. processing circuitry or logic) 102. The processor 102 may control the operation of the apparatus 100 in the manner described herein. The processor 102 can comprise one or more processors, processing units, multi-core processors or modules that are configured or programmed to control the apparatus 100 in the manner described herein. In particular implementations, the processor 102 can comprise a plurality of computer programs and/or hardware modules that are each configured to perform, or are for performing, individual or multiple steps of the functionality of the apparatus 100 as described herein.

The apparatus 100 comprises a memory 104. In some embodiments, the memory 104 of the apparatus 100 can be configured to store a computer program 106 with program code or instructions that can be executed by the processor 102 of the apparatus 100 to perform the functionality described herein. Alternatively, or in addition, the memory 104 can be configured to store any requests, resources, information, data, signals, or similar that are described herein. The processor 102 may be configured to control the memory 104 to store any requests, resources, information, data, signals, or similar that are described herein.

It will be appreciated that the apparatus 100 may comprise one or more virtual machines running different software and/or processes. The apparatus 100 may therefore comprise one or more servers, switches and/or storage devices and/or may comprise cloud computing infrastructure or infrastructure configured to perform in a distributed manner, that runs the software and/or processes.

It will be appreciated that the apparatus 100 may comprise other components in addition or alternatively to those indicated in Fig. 1. For example, in some embodiments, the apparatus 100 may comprise a communications interface. A communications interface may be for use in communicating with other apparatuses e.g. via a communications network, (e.g. such as other physical or virtual computing nodes). For example, the communications interface may be configured to transmit to and/or receive from nodes or network functions requests, resources, information, data, signals, or similar. The processor 102 may be configured to control such a communications interface to make/receive such transmissions.

The apparatus 100 may be implemented in (e.g. form part of) a communications network. In some embodiments herein, the apparatus 100, may be implemented in a management layer of a communications network.

More generally, the apparatus 100 may be implemented in any node/network device of a communications network. For example, the apparatus 100 may comprise any component or network function (e.g. any hardware or software) in a communications network suitable for performing the functions described herein. Examples of nodes include but are not limited to core network functions such as, for example, core network functions in a Fifth Generation Core network (5GC). It is realized that the apparatus 100 may be included as a node/device in any future network, such as a future 3GPP (3^{rd} Generation Partnership Project) sixth generation communication network, irrespective of whether the apparatus 100 would there be placed in a core network or outside of the core network.

A communications network or telecommunications network may comprise any one, or any combination of: a wired link (e.g. ASDL) or a wireless link such as Global System for Mobile Communications (GSM), Wideband Code Division Multiple Access (WCDMA), Long Term Evolution (LTE), New Radio (NR), WiFi, Bluetooth or future wireless technologies. The skilled person will appreciate that these are merely examples and that a communications network may comprise other types of links. A wireless network may be configured to operate according to specific standards or other types of predefined rules or procedures. Thus, a wireless network may implement communication standards, such as Global System for Mobile Communications (GSM), Universal Mobile Telecommunications System (UMTS), Long Term Evolution (LTE), and/or other suitable 2G, 3G, 4G, or 5G standards; wireless local area network (WLAN) standards, such as the IEEE 802.11 standards; and/or any other appropriate wireless communication standard, such as the Worldwide Interoperability for Microwave Access (WiMax), Bluetooth, Z-Wave and/or ZigBee standards.

Generally (as will be described in more detail below), the apparatus 100 is for use in protecting (or managing) a first machine learning model that is queryable over an application programming interface, API, against an adversary querying the first machine learning model through the API in order to build up a database of query-response pairs. Briefly the apparatus 100 is configured to identify a user of the API as a potential adversary and, in response to a query from the potential adversary, through the API, provide a response from a second machine learning model instead of the first machine learning model. The first machine learning model has been trained on a first dataset and the second machine learning model has been trained on a second dataset that is different to the first dataset.

The skilled person will be familiar with machine learning and models that can be trained using machine learning processes, but briefly, a machine learning process may comprise a procedure that is run on data to create a machine learning model. The machine learning process comprises procedures and/or instructions through which training data, may be processed or used in a training process to generate a machine learning model. The machine learning process learns from the training data. For example, the process may be used to determine how one set of parameters in the training data (input parameters of the model) are correlated with another set of parameters in the training data (output parameters of the model). The machine learning process may be used to fit the model to the training data. Machine learning processes can be described using math, such as linear algebra, and/or pseudocode, and the efficiency of a machine learning process can be analyzed and quantized. There are many machine learning processes, such as e.g. algorithms for classification, such as k-nearest neighbors, algorithms for regression, such as linear regression or logistic regression, and algorithms for clustering, such as k-means. Further examples of machine learning models are Decision Tree models and Artificial Neural Network models. Machine learning algorithms can be implemented with any one of a range of programming languages.

The model, or machine learning model, may comprise both data and procedures for how to use the data to e.g. make the predictions described herein. The model is what is output from the machine learning (e.g. training) process, e.g. a collection of rules or data processing steps that can be performed on the input data in order to produce the output. As such, the model may comprise e.g. rules, numbers, and any other algorithm-specific data structures or architecture required to e.g. make predictions.

Different types of models take different forms. Some examples of machine learning processes and models that may be used herein include, but are not limited to: linear regression processes that produce models comprising a vector of coefficients (data) the values of which are learnt through training; decision tree processes that produce models comprising trees of if/then statements (e.g. rules) comprising learnt values; and neural network models comprising a graph structure with vectors or matrices of weights and biases with specific values, the values of which are learnt using machine learning processes such as backpropagation and gradient descent.

In some embodiments, the first machine learning model is a decision tree or a random forest-based classifier, see papers: Quinlan (1986) entitled: "Induction of decision trees" Machine Learning volume 1, pages 81-106 (1986); and Breiman (2001) entitled "Random Forests"; Mach Learn 45(1): 5-32. In other embodiments, the first machine learning model is a deep neural network, see paper by Schmidhuber (2015) entitled: "Deep learning in neural networks: An overview" Neural Networks Volume 61, January 2015, Pages 85-117.

More generally, the first machine learning model (otherwise referred to herein as the first model) can be any type of classification or regression model, trained using a supervised or semi-supervised learning process. The first model has been trained on (e.g. using) a first dataset. The first dataset or first training dataset comprises training data examples, each training data example comprises an example set of input parameters and a ground truth value or label for said training data example.

The first dataset may comprise confidential data, e.g. such as confidential user information. The first dataset may comprise valuable data, for example, data that is difficult or expensive to acquire. The first dataset may be very large, e.g. containing hundreds or thousands of training examples. In other words, the first dataset may be valuable and thus a target for an adversary.

The first machine learning model is queryable over an application programming interface (API). For example, the first machine learning model is deployed, for example, as part of an ML-assisted service through which a user can query the model. "Queryable" in this sense means capable of being queried, e.g. that the user can send inputs to and receive outputs from the first machine learning model. For example, the user sends data that can be provided to the first machine learning model as input parameters over the API. The first machine learning model produces an output and this is sent to the user as the response from the API.

In this sense, a user is any third party who queries the first machine model. The user may be a person. Alternatively, the user may be a computer program or computer hardware that is configured to send one or more queries to the first machine learning model. A user may be a subscriber of an ML-assisted service, who is able to query the first machine learning model, via an API. A user may be a genuine or non-malicious user. A user may be a malicious user, who is performing an extraction attack. In embodiments where the user is a computer program or computer hardware, the computer program or computer hardware may thus be a malicious computer program or computer hardware that is configured e.g. to send a large number of queries in a coordinated or automated way in the form of an extraction attack. It is an object of the disclosure herein to deal with users who are suspected to be malicious and may be performing an extraction attack.

The apparatus 100 is for managing a suspected adversary. As described in the background section herein, an adversary is a type of user or "attacker" who queries the first machine learning model, in the normal way over the API, in order build up a database of query-response pairs. If enough query-response pairs are obtained or extracted from the model, then they can be used either directly to deduce model parameters or as a training set to train a new model. This is known as an extraction attack.

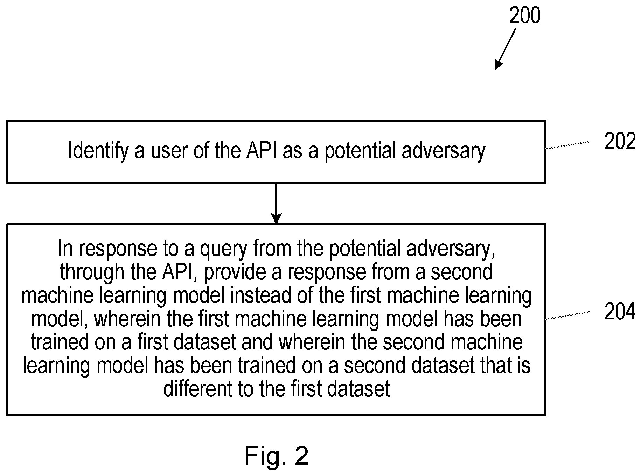

Turning now to Fig. 2, there is a computer implemented method 200 for use in protecting a first machine learning model that is queryable over an application programming interface, API, against an adversary querying the first machine learning model through the API in order to build up a database of query-response pairs. Briefly, in a first step the method comprises: identifying 202 a user of the API as a potential adversary. In a second step the method then comprises: in response to a query from the potential adversary, through the API, providing 204 a response from a second machine learning model instead of the first machine learning model, wherein the first machine learning model has been trained on a first dataset and wherein the second machine learning model has been trained on a second dataset that is different to the first dataset.

The method 200 is computer implemented. For example, the method 200 may be performed by an apparatus such as the apparatus 100 illustrated in Fig. 1. The method 200 is generally for use in managing a suspected extraction attack by a potential adversary, as described above.

In more detail, in step 202 a user of the API is identified as a potential adversary. As used herein, an adversary is a user who queries the first machine learning model, via the API, for the purposes of extracting data from the model, e.g. for use in replicating the model, or stealing the underlying data. It is often difficult to determine whether a user is a genuine user or an adversary, particularly in the early stages of an extraction attack. Thus, in embodiments herein, in step 202, users may be initially flagged as potential/possible adversaries.

Users may be identified (e.g. flagged) as possible adversaries in various different ways. For example, by comparing a query pattern of the user to query patterns of other users to determine whether the user is performing an abnormal query pattern compared to the other users. The other users may be other genuine users of the API or other services. In this way, suspicious behaviour may be identified by comparing the user to others.

As another example, step 202 may comprise comparing a query pattern of the user to previous query patterns of the user (e.g. historical query patters of the same user) to determine whether the user is currently performing an abnormal query pattern compared to their previous query patterns. For example, an otherwise legitimate user account may have been hacked by an adversary. Thus, historical or "normal" user patterns may be used as a reference against which to detect changes in user behaviour that may be indicative of an adversary.

As another example, step 202 may comprise comparing a query pattern of the user to query patterns associated with extraction attacks to determine whether the user is performing a query pattern consistent with an extraction attack. Generally, an adversary will want to sample the feature space so as to locate the decision boundaries of the model or to directly find the parameters of the ML model. Thus, examples of query patterns consistent with an extraction attack include, but are not limited to: a sequence of queries sampling the full input parameter space at (regular) intervals; a random sequence of queries sampling the full input feature space; or a query pattern from an adaptive method searching for decision boundaries or parameter values. In embodiments where the first machine learning model is a decision tree, in an adaptive method, an adversary may perform a query pattern designed to hone-in on a decision boundary, for example by determining first input parameters that produce a "yes" result, and second input parameters that produce a "no" result, and interpolating between the first input parameters and the second parameters in order to determine the input parameter values corresponding to the boundary.

One example abnormal query detection method is further described in the paper by Juuti, Mika, et al. (2019), referenced above. In their method, they compute the distance between input query points. They assume that query points will be approximately uniformly distributed, leading to a roughly Gaussian distance distribution, and detect deviations resulting from active probing for decision boundaries (similar to the interpolation previously mentioned). For comparing query patterns against other users or historical data, one may look at the distribution of query points in feature space and use known statistical methods, like hypothesis tests or metrics like KL-divergence.

In some embodiments, another machine learning model may be trained and used to predict whether a query pattern is malicious (e.g. consistent with an extraction attack). This is described in the paper entitled *"*Extraction of Complex DNN Models: Real Threat or Boogeyman?", Atli et al., (2020). In this paper a separate ML model is trained to determine if the incoming queries probe out-of-distribution or not (yes/no classification).

In another embodiment, step 202 can be based on data extraction level. As used herein, the data extraction level is an estimate of the proportion of the input feature space coverage of (previous) queries submitted by the user to the API. In other words, the "extraction progress". Thus, data extraction level can be a measure of feature space coverage of previous queries submitted by the user to the API. The data extraction level can be estimated using the techniques described in the paper by Kesarwani, Manish, et al. (2018), referenced in the background section above. The second method described in their paper uses feature space coverage to estimate model extraction progress by calculating, for each predicted class, the outer boundary of query points and comparing the resulting area with corresponding area covered by the training data points. This method, based on feature, space coverage can be advantageous in terms of saving computation. On the other hand, it assumes decision boundaries similar to decision tree-based models, and will be an approximation for other types of models. Another option for estimating extraction is to simply evaluate the achieved accuracy of the proxy model, as described in the paper, on a test data set. This requires training/retraining the proxy model each time an estimate is computed and new queries have been made.

In some examples, if a user has made queries that cover more than a predetermined data extraction level, then this may trigger step 204. For example, step 202 may comprise identifying or flagging the user of the API as a potential adversary if an estimation of a third data extraction level Is above a third threshold data extraction level. E.g. step 202 may comprise determining whether an estimation of a third data extraction level is above a third threshold data extraction level. In this way, users may be prevented from extracting further data from the first machine learning model if they extract data above the third data extraction level.

The skilled person will appreciate that the embodiments above are merely examples, and that a user may be identified as a potential adversary in other ways to those described herein. For example, through other user profiling methods (e.g. behavior of the user on other APIs, user credit history, missed subscription payments of the user etc).

Once a user is identified as a potential adversary, then the aim of embodiments herein is to service subsequent queries from the user in as accurate a manner as possible without revealing further information from the model. In this way, the user will continue to receive uninterrupted, high quality service (which is important in the event that the user is a genuine user) whilst preventing further information from being extracted from the model (which is important if the user is actually an adversary).

To this end, in response to a query from the potential adversary, through the API, the method 200 comprises providing 204 a response from a second machine learning model instead of the first machine learning model, wherein the first machine learning model has been trained on a first dataset and wherein the second machine learning model has been trained on a second dataset that is different to the first dataset.

Thus, the second machine learning model is substituted for the first machine learning model and acts as a surrogate for the first machine learning model. The first machine learning model is thus made inaccessible to the user (potential adversary), protecting the first machine learning model from further data extraction. At the same time, the second model allows the user to continue to receive uninterrupted service.

The second machine learning model may be any machine learning model that takes the same, or at least a subset of the same input parameters as the first machine learning model and provides as output the same, or at least a subset of the same outputs as the first machine learning model. In this way, the outputs of the second machine learning model can be, on the face of it, indistinguishable from the outputs of the first machine learning model.

The second machine learning model may be the same type of machine learning model as the first machine learning model (e.g. the first and second machine learning models may both be neural networks, decision trees, or any other type of supervised machine learning model as described above). The second machine learning model may have the same or similar architecture, for example the same or similar hyper-parameters.

Alternatively, the first and second machine learning models may be different types of models. E.g. the first machine learning model may be a neural network and the second machine learning model may be a decision tree, or any other combination of the types of supervised machine learning models described above.

The second machine learning model is trained on a second dataset that is different to the first dataset used to train the first model. Generally, the second ML model is similar to the deployed first ML model, however, it has lower performance in terms of accuracy. As described below, in some embodiments, the second dataset is selected so that the second ML model has lower performance in terms of accuracy for inputs dissimilar to previous queries, whilst retaining high accuracy for inputs that are similar to previous queries (from the suspected adversary). For example, the second ML model could be trained based on query response pairs that have already been sent to adversary and/or based on a smaller number of data samples.

Some example second models are as follows:

### Examples where the second ML model is trained on cached query-response pairs: "Incomplete Models"

In some embodiments, the second dataset comprises cached query-response pairs from previous queries requested by the potential adversary through the API, as stored in a cache. For example, the second model may be trained on previous (e.g. historical) queries made by the user, for which a response through the API has already been made. In this way, any new query that is in the same region of feature space as a previous query made by the user will receive a high quality response, but queries in different regions of the feature space that have not previously been queried by the user will receive a lower quality response. This prevents the user from extracting further data from the first model, whilst ensuring continuity (so that previously-made queries receive the same response). Thus, in the context of an ML-assisted service, this enables the service to provide a model that is as good as possible without leaking more information from the first machine learning model.

Examples where the second model is trained using cached query-response pairs may be described herein as "Incomplete Models" as the second data set used to train the second machine learning model covers only part of the feature space of the first dataset. An incomplete model is built from query response pairs that have been already sent to a potential model extraction adversary. There can be different levels of incompleteness defined by an incompleteness ratio. This measures the share of the second dataset that is from the query response pairs. For example, an incomplete model with 70% incompleteness ratio means that 70% of the training set used to train the incomplete model consists of query response pairs while the rest of the training set is selected from other sources (some or all of which may be from the first dataset and thus be confidential). This approach aims to ensure that the deployed model will not leak any additional information and reacts proportionally to different level of extraction.

Query-response pairs may be stored in a per-user cache or database. The cache is a database that stores a collection of query-response pairs between the ML-assisted service and users. For example, every query made by each user of the API (or ML-assisted service) may be stored in the cache following the query. The main motivation for using a cache is to deliver the same responses for the same incoming queries, thus providing the appearance to the potential adversary that the same model is being queried following the switch from the first ML model to the second ML model.

In examples where the second dataset comprises cached query-response pairs, the second dataset may be complemented with further data in order to build up sufficient training examples with which to train the second model. For example, the method 200 may further comprise using a data augmentation process to generate synthetic training data from the cached query-response pairs, and supplementing the second dataset with the synthetic training data. The skilled person will be familiar with data augmentation processes, which may be used to generate further training examples from existing training data examples (e.g. the cached query-response pairs) that can be added to the second dataset. As an example, a data augmentation process may be used to perturb input parameter values, without affecting the output label. As an example, where the training data comprises images that are labelled according to content, the images may be blurred, rotated, mirrored, cropped, tilted, or their contents moved around, or otherwise transformed, without affecting the labelling (e.g. an image of a blurred cat is still labelled as a cat). Papers describing augmentation techniques are: *"*The Effectiveness of Data Augmentation in Image Classification using Deep Learning" (Perez L., Wang J., 2017) and *"*Understanding Data Augmentation for Classification: When to warp?" by Wong S., Gatt A., Stamatescu V., McDonnell M., 2016 International Conference on Digital Image Computing: Techniques and Applications (DICTA).

In other examples, the second dataset may be supplemented with synthetic training data, e.g. generated using an emulator.

More generally, in examples where the second dataset comprises cached query-response pairs, the second dataset may be complemented with any other training examples for which inclusion in the second dataset would not lead to leakage of valuable data. As an example, the cached query-response pairs might be supplemented with further data from the first data set that is low quality or that is not confidential. For example, the second dataset may be complemented with training data from the first dataset that is on average of lower quality compared to the average quality of the first dataset as a whole; or that has a quality rating below a first quality rating threshold. In this way, high quality data may be prevented from further leakage and the second machine learning model may be trained to provide high quality outputs in regions of the feature space that have previously been queried, and lower quality, but still useful, outputs in other regions of the feature space.

As another example, the second dataset may be complemented with training data from the first dataset that is not confidential, on average less confidential compared to the average confidentiality level of the first dataset as a whole. Put another way still, the first dataset may comprise confidential training data that is not comprised in (e.g. removed from) the second dataset.

In another example, the second dataset may be complemented with data that is publicly available or unrestricted, e.g. from open-source databases. In this way, leakage of further high quality, confidential data can be prevented, whilst still generally providing high quality service to the user/suspected adversary.

Incomplete models may be generated/trained when the ML assisted service is up and running, e.g. real-time training on the cached query-response pairs. Incomplete models are user-specific (as they are trained on the cached query-response pairs saved for the particular user). The skilled person will be familiar with real-time training methods that can be used, for example, standard ML model libraries can be used such as the sci-kit-learn library which is described in the paper *"*Scikit-learn: Machine Learning in Python", by Pedregosa et al., JMLR 12, pp. 2825-2830, 2011.

### "Default Models": examples where the second ML model is trained on other data

In other embodiments, instead of providing a response from a second model based on cached query-response pairs for the user, responses may be provided from a "default" or back-up model that is used as the second model. A default model may be a ready-to-use second machine learning model. One motivation of the use of a default model is to operate the software without latency, because training a new incomplete model from cached query-response pairs in real-time can take time to prepare. A default model on the other hand can be deployed to the ML-assisted service together with a deployed model.

Examples of the second ML model that may be considered "default models" in this manner will now be described. In some embodiments, the second ML model may be trained on a subset of the first dataset used to train the first ML model. The subset of the first dataset used in the second dataset may be training data from the first dataset that is on average of lower quality compared to the average quality of the first dataset as a whole. In another example, a second machine learning model may be provided that has just been trained on non-confidential data. In other words, the second machine learning model may be trained on training examples from the first dataset that are on average less confidential compared to the average confidentiality level of the first dataset as a whole. Put another way still, the first dataset may comprise confidential training data that is not comprised in the second dataset. In this way, a default model of lower quality and/or lower confidentiality may be substituted in for the first machine learning model if an extraction attack is suspected.

In other examples, a default model may be trained using training data from the first dataset, the values of which have been offset with random offset values. In this way a default model may be provided that is of lower quality to the first model, but that is still capable of providing responses across the full input feature space, whilst still mitigating or delaying an extraction attack. In other examples, a default model may be trained on synthetic data, or data that is publicly available. In this way, service is maintained without leaking any sensitive or otherwise valuable data.

As noted above, an advantage of using a default model as the second model is that, as it does not require any training or cached query-response pairs, it can be trained and deployed at the same time as the first model and this reduces latency, e.g. the "default" second model can be deployed instantaneously, without any delay, in the event that the user is identified as a potential adversary.

It is noted that step 202 may comprise selecting the second model from a plurality of models. For example, there may be one or more default models and/or one or more incomplete models prepared as described above, and in step 202 one of the plurality of models may be selected as the second model. For example, as described below, initially a default model may be selected whilst an incomplete model is trained. Once trained, the incomplete model may then be used as the second model. In another example, the second model may be retrained/replaced over time, as an extraction attack progresses.

### Training and using the Second ML Model

Turning now to other embodiments, in some embodiments, the training of the second model may be triggered responsive to the step of identifying 202 the user as a potential adversary. For example, the method 200 may comprise, responsive to identifying the user of the API as a potential adversary, training the second machine learning model on the second dataset. In examples where the second dataset comprises cached-query response pairs, this has the advantage of triggering training only when the user is identified as a potential adversary. This ensures the second model is trained on an up-to-date list (or the most up to date list possible) of the cached queries that the user has made and also ensures that models are not trained unnecessarily, e.g. for non-adversaries.

In embodiments where the second dataset comprises query-response pairs from previous queries requested by the potential adversary through the API, as stored in a cache, the second machine learning model may be trained in an incremental manner on the previous queries, as they are cached. The training may take place in a pre-emptive manner. For example, the second machine learning model may be trained responsive to an estimation of a first data extraction level being above a first threshold data extraction level and/or responsive to a first estimation of likelihood that the user of the API is actually an adversary being above a first likelihood threshold. The first data extraction level and first likelihood threshold may thus correspond to the "preparation" thresholds at which a second model is prepared for use, e.g. trained, in the event that the user is flagged as a potential adversary. The first data extraction level and first likelihood threshold can be set by a human engineer and specified in a defence policy rule.

In some embodiments, a combination of the default and incomplete models above may be used to respond to queries of an identified potential adversary in step 204. For example, a default model may initially be used whilst an incomplete model is trained for the user on the user's previous query-response pairs. As such, in embodiments where the second machine learning model is trained on cached query-response pairs, in response to a query from the potential adversary through the API, the method 200 may comprise providing a response from a third machine learning model instead of the first machine learning model, whilst the second machine learning model is being trained. There may be a delay between identifying the user as a potential adversary and training the second machine learning model. Thus, in order to prevent further information leakage, the third model may be deployed whilst the second model is trained. The third model may be a "default" model, as described above with respect to embodiments of the second model. The third model may be any type of supervised machine learning model, as described above with respect to the first and second machine learning models. For example, the third model may have been trained on low confidential data from the first dataset; low quality data from the third dataset; synthetic data; data from the first dataset offset with random offsets; data that is publicly available, or any other data that is less valuable, as described above.

As noted above, the training of the second machine learning model may be performed in a pre-emptive manner, before the user is identified, or flagged as a potential adversary. As noted above, the training may be performed responsive to an estimation of a first data extraction level being above a first threshold data extraction level and/or a first estimation of likelihood that the user of the API is actually an adversary being above a first likelihood threshold.

In some embodiments, thresholds are also defined at which the second machine learning model should be deployed. For example, the step of providing a response from a second machine learning model instead of the first machine learning model may be performed responsive to an estimation of a second data extraction level being above a second threshold data extraction level, and/or a second estimation of likelihood that the user of the API is actually an adversary being above a second likelihood threshold. The second threshold data extraction level and the second likelihood threshold may be considered "deployment" thresholds for the second model, e.g. the thresholds at which the second ML model is deployed in place of the first ML model. The use of two thresholds in this manner allows a second model to be trained in preparation for deployment in an appropriate time-frame. The second threshold data extraction level and the second likelihood threshold may be set by a human engineer and defined in a defence policy rule.

Thus, there is described herein, reactive methods and apparatuses for protecting a first ML model from a suspected extraction attack whilst maintaining service to a user.

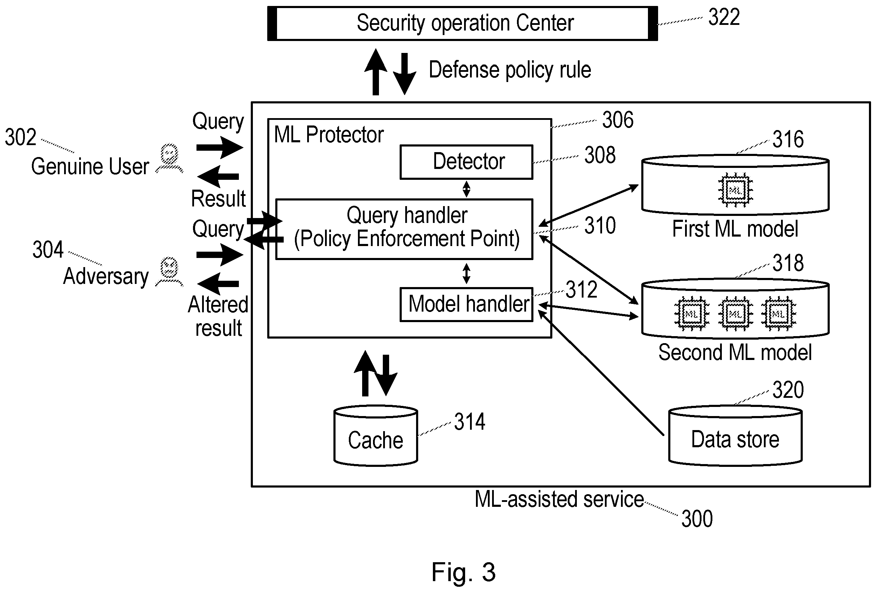

Turning now to Fig. 3, which illustrates an ML assisted service 300 according to some embodiments herein. The ML assisted service 300 hosts a first machine learning model 316 that is queryable over an API managed by a query handler 310. The ML assisted service 300 receives queries from a plurality of genuine users 302, as well as a potential adversary 304. An ML Protector function 306 is used to manage the response of the ML assisted service 300 towards the potential adversary 304 in order to protect the first machine learning model against the potential adversary 304 querying the first machine learning model through the API in order to build up a database of query-response pairs.

In this example, the ML-assisted service 300 also comprises a model extraction detector function 308 and a per-user cache 314, e.g. a database of query-responses.

The ML-assisted service 300 may be any service containing a first ML model 316. Upon initialization of the ML-assisted service 300, the first ML model is deployed model as a part of the ML-assisted service. For example, the ML-assisted service may include an analysis engine for measuring an impact of LTE eNodeB upgrade, which uses a Machine Learning model to provide an intervention analysis.

The ML-assisted service 300 provides an exposed API for its users to access its functionality. One example of the software is the Machine Learning as a Service (MLaaS) platforms operated by cloud vendors providing recommendations via Representational State Transfer (RESTful) API or a small software function providing predictions via an API.
In more detail, in this embodiment, the ML assisted service 300 comprises the following functions.

The first ML model 316: A Machine Learning model that is deployed to the ML assisted service. The first ML model is trained based on confidential data samples. The first ML model may also be referred to as the original model, confidential model or protected model.

Second ML model 318: A surrogate Machine Learning model that is designed to protect against an adversary extracting more information from the deployed model, as described in detail above.

User 302: An authorized user of the ML-assisted service. A user may pay per usage of the ML-assisted service or for a periodic subscription to the service.

Potential Adversary 304: A user that might be performing a model extraction attack, e.g. a potential adversary.

ML-protector 306: This function intercepts incoming ML inference queries and enforces defense policy rules in order to protect the first ML model 316 from model extraction attacks. The ML-protector 306 comprises:
- Detector 308: A model extraction detector aiming to differentiate potential adversaries 304 from genuine users 302. The detector 308 performs step 202 of the method 200, and identifies potential adversaries through methods such as extraction progress estimations and/or abnormal query detection as described above with respect to step 202 of the method 200.
- Query handler 310: Receives incoming inference queries, decides how to handle them, e.g., which ML model (first or second) to query and whether to prompt the model handler 312 to create and train a new incomplete model for use as the second ML model for a particular user. The query handler stores query/response pairs in the cache 314, and returns a response from the appropriate model to the users/potential adversary 302, 304.
- Model handler 312: Handles training and deployment of the second ML model 318.
- Cache 314: A database that stores a collection of query-response pairs between the ML-assisted service and users. This collection is used for future query requests to be served faster than recomputing a response. The collection could also be used when the service prepares to train the second model. This database is hidden to users and may be considered part of the ML-protector or separate.
- Datastore 320: A database for storing models and/or any other data produced by the ML assisted service 300.

Security operation Center 322: A centralized unit that manages security issues by analyzing attacks and deciding the appropriate actions to take.

The ML-assisted service 300 may form part of an apparatus such as the apparatus 100 described above. For example, the first ML model, the second ML model and/or any other data described with respect to the ML-assisted service 300 may be stored in the memory 104 of the apparatus 100. The processor 102 of the apparatus 100 may be configured to perform any of the operations of the functions described herein with respect to the ML-assisted service 300.

The functions above operate in the following manner. The detector function 306 performs step 202 of the method 200 described above and identifies a user as a potential adversary 304. In the embodiment of Fig. 3, the detector 306 performs step 202 based on techniques such as estimated data extraction levels and/or abnormal query pattern detection as described above. Whenever there are incoming queries from users 302, the detector 308 updates the estimated data extraction levels of each monitored user. The detector 306 determines how to respond to each incoming query based on the determined data extraction levels, in order to react proportionally to the potential threat. Rules for how to respond, e.g. defence policy rules, are provided to the ML protector by a security operation centre 322 and may be set e.g. by a human-engineer. Based on the defense policy rules, the ML assisted service 300 will provide a response either from the first ML model 316, or from a second ML model 318. In other words, if the estimated data extraction level of a user 302 becomes too high then the user will be identified 202 as an adversary 304 and the model handler 312 will perform step 204 of the method 200 and replace the first ML model with the second ML model, in order to protect the first ML model against further data extraction by the identified potential adversary 304.

In this embodiment, a second ML model is used that is trained using cached query-response pairs stored in the per-user cache 314 (e.g. an incomplete model as described above). As noted above, the ML-assisted service 300 uses a set of defense policy rules (obtained from security operation center 322) for determining the level of severity of a model extraction attack and for defining how to react. A defense policy rule may include a component or rule for preparation and training of the second ML model and a component for execution of the second ML model. Each component may contain its own threshold, for example, a first threshold data extraction level defining a threshold at which to prepare e.g. begin to train the second ML model on the cached query-response pairs and a second threshold data extraction level defining a threshold at which to being to use the second ML model when replying to user-queries in place of the first ML model. The main motivation of having the first threshold data extraction level is to prepare the second ML model in time to operate the ML-assisted service 300 without latency.

Recall that one objective of embodiments herein is continuous service to the API user to minimize risk of negative impact from false positive extraction alerts. Latency to deploy a second ML model leads to the following dilemma: if the service waits until the second ML model is trained in order to serve requests, the delay to the user can negatively affect the system; on the other hand, if the service continues to serve requests using the first ML model whilst the second ML model is being trained, then if the potential adversary 304 is a real adversary, there is the risk that they will be able to complete the extraction attack before the second ML model is in place. Consequently, the defense policy rules may comprise options to start preparing and training the second ML model at a lower data extraction level (the first threshold data extraction level) than the threshold for deployment of the second ML model is reached (second threshold data extraction level).

If the first ML model is of a type that supports incremental training (aka. online training), then at the first threshold data extraction level (preparation threshold) a second ML model of the same type as the first ML model may trained on all data points in the cache up to that point, and from then on it can be trained, incrementally, on further query points until the second threshold data extraction level is reached and the switch is made. Thus, latency will be minimal as it only requires incremental training using the last data point to make the switch.

If the first ML model (the model being protected) does not support incremental/online training, as is the case, e.g., for traditional ML models like Random Forest, then there are three options options: i) use a model of a different type than the original first ML model, as the second ML model, ii) use the same type of model as the first ML model as the second ML model, on data points cached up to a point preceding the switch over time (e.g., missing out on the most recent queries) or iii) use the same type of model as the first ML model as the second ML model but substitute a third ML model for the first ML model (e.g. in the form of a default model) whilst the second ML model is being trained.

For option (i) there is a potential discrepancy between the first ML model and the second ML model due to the differences arising from using a different model type, while (ii) has a discrepancy as it does not include all of the cached query-response data points for the user. A similar trade off applies to the use of a default models in option iii), which if used lack information about which queries have been performed previously, and may thus exhibit discrepancies to what the user/adversary has seen previously. In any event the advantages of all three options are that the user is prevented from extracting further information from the model, with minimal service interruption to the user.

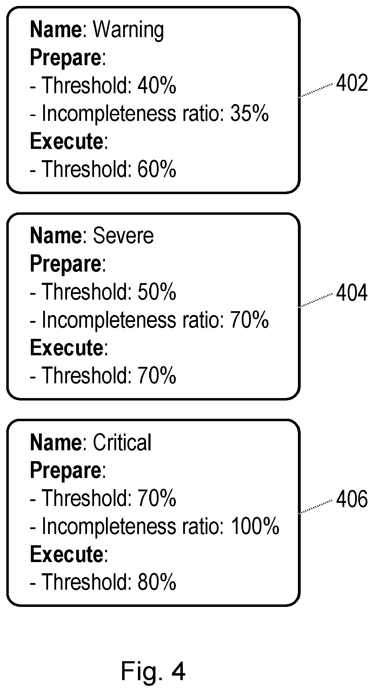

Turning now to Fig. 4 which illustrates of a set of example defense policy rules 402, 404, 406. A rule may comprise components to related to when to prepare and execute the second ML model. In this example, the thresholds are described with respect to data extraction level (as described above) however it will be appreciated that this is merely an example and that preparation and execution thresholds could equally be set based on other extraction progress estimations or likelihood measures relating to attack progression /likelihood of the user being an adversary.

As an example, a defense policy rule may comprise the following fields: Name: A label for the defense policy rule. One example is to use severity levels, which could be categorized as: warning, severe and critical. For example, the warning level may refer to a situation that is concerning, the severe level may refer to a situation where the first ML model may be under attack, and the critical level refers to a situation where the functionality of the first ML model is nearly (fully) extracted by a model extraction adversary.
Prepare: A component defining a threshold for preparing an incomplete model (as described above) for use as the second ML model.
   Threshold: A threshold to prepare a new incomplete model (e.g. the first threshold data extraction level described above). If an estimated attack progress of a user reaches this threshold, the ML-assisted service prepares a new incomplete model.
   Incompleteness ratio: A ratio measuring the share of the training set that is from the query response pairs that have been already sent to potential adversary. In this example, the remaining data in the second dataset is selected from a pool of (confidential or otherwise valuable) data samples. The pool of data samples may be the same pool from which the first dataset was chosen.
Execute: A component defining a threshold for executing an incomplete model and an incompleteness ratio of the incomplete model that will be prepared and executed. Threshold: A threshold to execute a new target incomplete model that is prepared to operate so that the deployed model is no longer exposed to a potential adversary (e.g. second threshold data extraction level described above). If an estimated attack progress of one user is reached to this threshold, the ML-assisted service executes an incomplete model in order to handle a query from that user.

An example rule may be:
"Name: Warning. Threshold to prepare: 40%. Threshold to execute: 60%. Incompleteness ratio: 35%". This rule can be interpreted as: "In a warning situation, prepare an incomplete model (for use as the second ML model described above) with 35% incompleteness ratio (e.g. 35% of the training dataset is comprised of previously submitted query response pairs and where the rest of the data is selected from a pool of data examples). The incomplete model should be prepared if the monitored user's extraction progress has reached the "Threshold to prepare", which in this example is set at 40% extraction. The example rule then specifies that a response should be provided from the incomplete model (e.g. the second model should be substituted for the first model) when the monitored user's extraction progress reaches 60% extraction.

To further illustrate this example rule, if it was detected that a potential adversary has reached 40% attack progress by sending 200 query-response pairs, the service will start to prepare a new incomplete model. The new incomplete model will be built using 571 data samples, which consists of 200 query-response pairs (35%) and 371 confidential data samples (65%). The new incomplete model will serve the potential adversary's query requests when the adversary reaches 60% attack progress.

As illustrated in Fig 4, the severity levels for defense policy rule names may be categorized as: warning, severe and critical; where warning level refers to a situation that is concerning, severe level refers to a situation that Machine Learning functionality may be under attack, and critical level refers to a situation that Machine Learning functionality is nearly extracted by model extraction adversaries. These are merely examples however, and the skilled person will appreciate that different rules with different names and/or thresholds may be implemented to those in Fig. 4, dependent on the particular circumstances and system requirements.

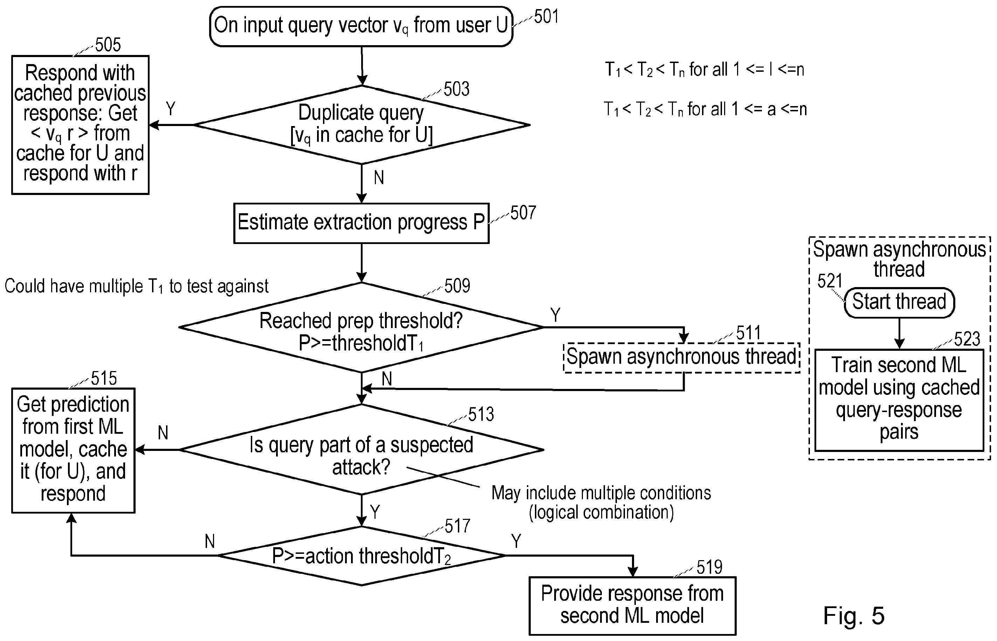

Turning now to Fig. 5, which illustrates an example method that may be performed by the ML-assisted service 300 described above.

At 501, the ML-assisted service receives a query with feature vector v_{q} from a user 302 or group of users, U, to the first ML model. For example, a user 302 sends a query via the network API of the first ML model or to an offline software that contains the first ML model.

At 503, the ML-assisted service determines whether the incoming query is already cached for user(s) U.

At 505, if the query is cached, the ML-assisted service provides a cached response to the incoming query.

At 507, the data extraction level (e.g. extraction progress, P) is estimated e.g. using a technique such as that described in Kesarwani, Manish, et al. (2018) referenced in the background section, to determine how much (P) of the model has been extracted and if user(s) U is attempting model extraction.

At 509, the system determines whether, in case this is an attack, the data extraction level has reached a first threshold data extraction level (preparation threshold, threshold T₁) at which a level, a second ML model in the form of an incomplete MI model needs to be prepared.

At 511, if a second ML model needs to be prepared, then a separate asynchronous thread is spawned to train and deploy an incomplete model. These steps are shown as 521-523. As described earlier, a set of policies may define these thresholds and some conditions for how the incomplete models should be prepared (incompleteness ratio). A third ML model such as a default model described above may be deployed whilst the second ML model (incomplete model) is being trained. In such examples, the incomplete model trained in 521 and 523 will replace the default model after it is trained. This can be an iterative process, with steps 521 and 523 being repeated later, and the incomplete model replaced again.

At 513, the ML-assisted service performs step 202 of the method 200 described above and identifies whether the user who sent the incoming query is a potential adversary. This step uses at least one model extraction detection technique in order to estimate the potential adversary's attack progress. As an example, this step may use the techniques described in Kesarwani, Manish, et al. (2018) referenced in the background section to estimate the data extraction level and may additionally weigh in results from techniques such as Out-of-Distribution detection or query pattern anomaly detection described above.

If the combined evidence indicates the user is a potential adversary (e.g. indicates a potential attack), then the method continues at 517 to choose appropriate action. The system may also send a warning to the Security operation Center, for further analysis and actions.

If the user is not identified as a potential adversary in step 513, then a normal response is returned in 515 from the first ML model to the incoming query.

At 517, if the user is identified as a potential adversary, but the extraction progress as not yet reached a second threshold data extraction level (action threshold), then the ML-assisted service may still provide a normal response 515 (This is a conservative choice, with lowest risk of degrading the service.) However, if the extraction progress has reached the second threshold data extraction level (action threshold), then the method proceeds to step 519.

At 519, the ML-assisted service provides a response from a second ML model instead of the first ML model (e.g. step 204 of the method 200 described above is performed).

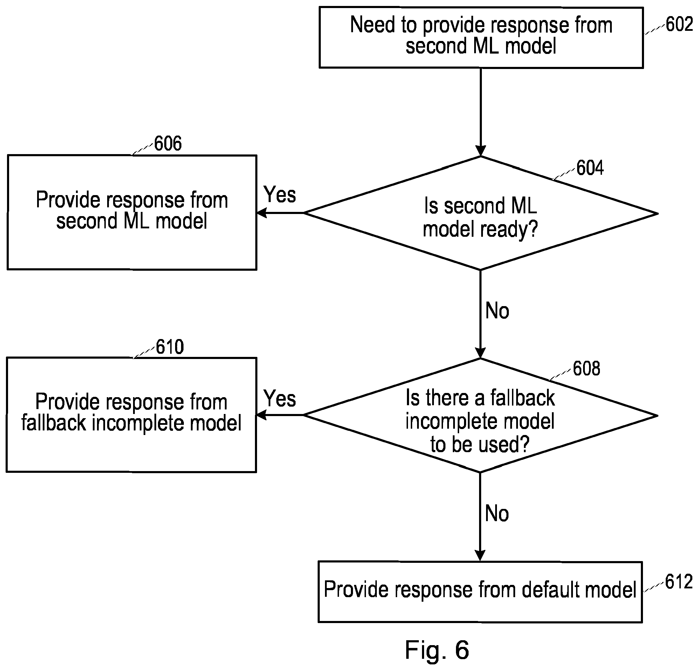

Turning now to Fig. 6, which shows a flowchart illustrating a method of providing a response from a second ML model according to some embodiments herein. The method may be performed as part of step 519 of Fig. 5 in order to determine which type of model to substitute for the first ML model in step 204 of the method 200 above.

In this embodiment, the second ML model is an incomplete model, trained on cached query-response pairs as described above. In other words, an incomplete model that is expected to be execute according to the defense policy rule. This model is built on query-response pairs between the ML-assisted service and a potential adversary; it will be trained while the service is up and running. Incomplete models were described in detail above with respect to Fig. 2 and the detail therein will be understood to apply equally to incomplete models described with respect to Fig. 6.

Whilst the second (incomplete) ML model is being trained, responses to queries from an identified potential adversary may be responded to using outputs of a third ML model of one of the following types:
i) A "Fallback" incomplete model: An incomplete model that is not expected to be use for this situation but is ready for another defense policy rule. For example, an incomplete model for the warning situation may be temporarily used for the severe situation while a new incomplete model for the severe situation is being trained.
ii) A "Default" model: A pre-trained model that is activated when no other models are available. As described in detail above with respect to Fig. 200, there are various ways of implementing default models. For example, a default model may be trained using less confidential or accurate data samples, or its model architecture may be different type than the original. It may also be trained on synthetic or publicly available data. This model may be trained before the service is up and running and may be deployed to ML-assisted service together with original model. Default models were described in detail above with respect to Fig. 2 and the detail therein will be understood to apply equally to default models described with respect to Fig. 6.

In the scenario that the second ML model (an incomplete model) is not yet available, e.g. it is in the process of being trained, the ML-assisted service uses a fallback incomplete model or a default incomplete model as follows:
At 602, the ML-assisted service needs to provide a response from the second ML model (incomplete) model.
At 604, the ML-assisted service determines whether the second ML model is ready to provide a response to the potential adversary or not.
At 606, if the second ML model is ready, the ML-assisted service provides a response from the second ML model to the incoming query.
At 608, if the second ML model is not ready, e.g. it is being trained, then the ML-assisted service determines whether there is a fallback incomplete model that could be used to respond to the incoming query.
At 610, if there is a fallback incomplete model then the ML-assisted service provides a response from the fallback incomplete model to the incoming query.
At 612, if there is not an available fallback incomplete model, then the ML-assisted service provides a response from the third ML model (default model) to the incoming query.

This process may be repeated for each subsequent query received from the potential adversary.

Turning now to other embodiments, there is also provided a computer program product comprising a computer readable medium, the computer readable medium having computer readable code embodied therein, the computer readable code being configured such that, on execution by a suitable computer or processor, the computer or processor is caused to perform the method or methods described herein.

Thus, it will be appreciated that the disclosure also applies to computer programs, particularly computer programs on or in a carrier, adapted to put embodiments into practice. The program may be in the form of a source code, an object code, a code intermediate source and an object code such as in a partially compiled form, or in any other form suitable for use in the implementation of the method according to the embodiments described herein.

It will also be appreciated that such a program may have many different architectural designs. For example, a program code implementing the functionality of the method or system may be sub-divided into one or more sub-routines. Many different ways of distributing the functionality among these sub-routines will be apparent to the skilled person. The sub-routines may be stored together in one executable file to form a self-contained program. Such an executable file may comprise computer-executable instructions, for example, processor instructions and/or interpreter instructions (e.g. Java interpreter instructions). Alternatively, one or more or all of the sub-routines may be stored in at least one external library file and linked with a main program either statically or dynamically, e.g. at run-time. The main program contains at least one call to at least one of the sub-routines. The sub-routines may also comprise function calls to each other.

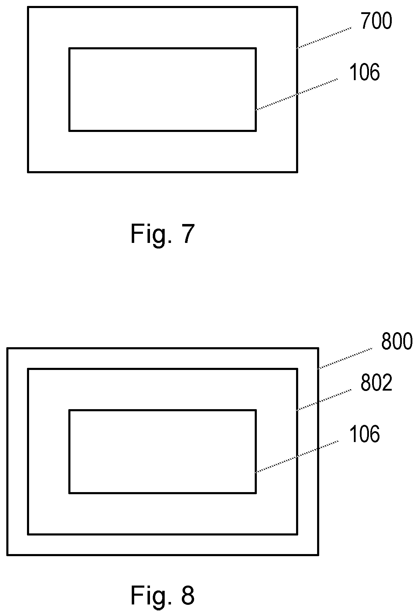

Fig. 7 shows a carrier 700 containing a computer program 106. A carrier may be an electronic signal, optical signal, radio signal or computer readable storage medium. The carrier of a computer program may be any entity or device capable of carrying the program. For example, the carrier may be or include a computer readable storage medium, such as a ROM, for example, a CD ROM or a semiconductor ROM, or a magnetic recording medium, for example, a hard disk. Furthermore, the carrier may be a transmissible carrier such as an electric or optical signal, which may be conveyed via electric or optical cable or by radio or other means. When the program is embodied in such a signal, the carrier may be constituted by such a cable or other device or means. Alternatively, the carrier may be an integrated circuit in which the program is embedded, the integrated circuit being adapted to perform, or used in the performance of, the relevant method.

Fig. 8 shows a computer program product 800 comprising non transitory computer readable media 802 having stored thereon a computer program 106 as described above.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A computer-implemented method for use in protecting a first machine learning model that is queryable over an application programming interface, API, against an adversary querying the first machine learning model through the API in order to build up a database of query-response pairs, the method comprising:
identifying (202) a user of the API as a potential adversary; and
in response to a query from the potential adversary, through the API, providing (204) a response from a second machine learning model instead of the first machine learning model, wherein the first machine learning model has been trained on a first dataset and wherein the second machine learning model has been trained on a second dataset that is different to the first dataset,
wherein the second dataset comprises cached query-response pairs from previous queries requested by the potential adversary through the API, as stored in a cache.

2. The method as in claim 1 wherein the second dataset is supplemented with:
training data from the first dataset that is on average of lower quality compared to the average quality of the first dataset as a whole;
training data from the first dataset that is not confidential; and/or
training data that is publicly available.

3. The method as in claim 1 wherein the second dataset comprises a subset of the data in the first dataset, and optionally
wherein the subset of the data in the first dataset comprises:
training data from the first dataset that is on average of lower quality compared to the average quality of the first dataset as a whole; and/or
training data from the first dataset that is on average less confidential compared to the average confidentiality level of the first dataset as a whole.

4. The method as in any one of the preceding claims wherein the second machine learning model:
has a different architecture to the first machine learning model; or
is a different type of model to the first machine learning model.

5. The method as in any one of the preceding claims further comprising:
responsive to identifying the user of the API as a potential adversary, training the second machine learning model on the second dataset, and optionally wherein the second machine learning model is trained responsive to:
an estimation of a first data extraction level being above a first threshold data extraction level; or
a first estimation of likelihood that the user of the API is actually an adversary being above a first likelihood threshold.

6. The method as in claim 5 further comprising:
in response to a query from the potential adversary through the API, providing a response from a third machine learning model instead of the first machine learning model, whilst the second machine learning model is being trained.

7. The method as in claim 5 or 6 wherein the second dataset comprises query-response pairs from previous queries requested by the potential adversary through the API, as stored in a cache and wherein the second machine learning model is trained in an incremental manner on the previous queries as they are cached.

8. The method as in any one of the preceding claims wherein the step of providing a response from a second machine learning model instead of the first machine learning model is further performed responsive to:
an estimation of a second data extraction level being above a second threshold data extraction level; or
a second estimation of likelihood that the user of the API is actually an adversary being above a second likelihood threshold.

9. The method as in any one of the preceding claims wherein the second machine learning model is deployed with the first machine learning model.

10. The method of claim 5 or 8 wherein the data extraction level is a measure of feature space coverage of previous queries submitted by the user to the API.

11. The method as in any one of the preceding claims wherein the second machine learning model produces lower accuracy outputs than the first machine learning model.

12. The method as in any one of the preceding claims wherein the first dataset comprises confidential training data that is not comprised in the second dataset.

13. The method as in any one of the preceding claims wherein the method is for use in managing a suspected extraction attack by the potential adversary.

14. An apparatus for use in protecting a first machine learning model that is queryable over an application programming interface, API, against an adversary querying the first machine learning model through the API in order to build up a database of query-response pairs, the apparatus comprising:
a memory comprising instruction data representing a set of instructions; and
a processor configured to communicate with the memory and to execute the set of instructions, wherein the set of instructions, when executed by the processor, cause the apparatus to:
identify a user of the API as a potential adversary; and
in response to a query from the potential adversary, through the API, provide a response from a second machine learning model instead of the first machine learning model, wherein the first machine learning model has been trained on a first dataset and wherein the second machine learning model has been trained on a second dataset that is different to the first dataset, and wherein the second dataset comprises cached query-response pairs from previous queries requested by the potential adversary through the API, as stored in a cache.

15. An apparatus (100) as in claim 14 wherein the processor (102) is configured to perform the method of any one of claims 2 to 13.

## Patentansprüche

1. Computerimplementiertes Verfahren zur Verwendung beim Schutz eines ersten Modells für maschinelles Lernen, das über eine Anwendungsprogrammierschnittstelle, API, abfragbar ist, vor einem Gegner, der das erste Modell für maschinelles Lernen über die API abfragt, um eine Datenbank mit Abfrage-Antwort-Paaren aufzubauen, wobei das Verfahren Folgendes umfasst:
Identifizieren (202) eines Benutzers der API als potenziellen Gegner; und
in Reaktion auf eine Abfrage von dem potenziellen Gegner über die API Bereitstellen (204) einer Antwort von einem zweiten Modell für maschinelles Lernen anstelle des ersten Modells für maschinelles Lernen, wobei das erste Modell für maschinelles Lernen anhand eines ersten Datensatzes trainiert wurde und wobei das zweite Modell für maschinelles Lernen anhand eines zweiten Datensatzes trainiert wurde, der sich von dem ersten Datensatz unterscheidet.
wobei der zweite Datensatz zwischengespeicherte Abfrage-Antwort-Paare aus vorherigen Abfragen umfasst, die von dem potenziellen Gegner über die API angefordert wurden, wie in einem Cache gespeichert.

2. Verfahren nach Anspruch 1, wobei der zweite Datensatz mit Folgendem ergänzt wird:
Trainingsdaten aus dem ersten Datensatz, die im Durchschnitt eine geringere Qualität aufweisen als die durchschnittliche Qualität des ersten Datensatzes insgesamt;
Trainingsdaten aus dem ersten Datensatz, die nicht vertraulich sind; und/oder
Trainingsdaten, die öffentlich verfügbar sind.

3. Verfahren nach Anspruch 1, wobei der zweite Datensatz eine Teilmenge der Daten im ersten Datensatz umfasst, und optional
wobei die Teilmenge der Daten in dem ersten Datensatz Folgendes umfasst:
Trainingsdaten aus dem ersten Datensatz, die im Durchschnitt eine geringere Qualität aufweisen als die durchschnittliche Qualität des ersten Datensatzes insgesamt; und/oder
Trainingsdaten aus dem ersten Datensatz, die im Durchschnitt weniger vertraulich sind als der durchschnittliche Vertrauensgrad des ersten Datensatzes insgesamt;

4. Verfahren nach einem der vorhergehenden Ansprüche, wobei das zweite Modell für maschinelles Lernen
eine andere Architektur als das erste Modell für maschinelles Lernen aufweist; oder
einen anderen Typ von Modell als das erste Modell für maschinelles Lernen aufweist,

5. Verfahren nach einem der vorhergehenden Ansprüche, ferner umfassend:
in Reaktion auf das Identifizieren des Benutzers der API als potenziellen Gegner Trainieren des zweiten Modells für maschinelles Lernen anhand des zweiten Datensatzes und wobei optional das zweite Modell für maschinelles Lernen in Reaktion darauf trainiert wird, dass:
eine Schätzung eines ersten Datenextraktionsgrads über einem ersten Schwellendatenextraktionsgrad liegt; oder
eine erste Schätzung einer Wahrscheinlichkeit, dass der Benutzer der API tatsächlich ein Gegner ist, über einer ersten Wahrscheinlichkeitsschwelle liegt.

6. Verfahren nach Anspruch 5, ferner umfassend:
in Reaktion auf eine Abfrage von dem potenziellen Gegner über die API Bereitstellen einer Antwort von einem dritten Modell für maschinelles Lernen anstelle des ersten Modells für maschinelles Lernen, während das zweite Modell für maschinelles Lernen trainiert wird.

7. Verfahren nach Anspruch 5 oder 6, wobei der zweite Datensatz Abfrage-Antwort-Paare aus vorherigen Abfragen umfasst, die von dem potenziellen Gegner über die API angefordert wurden, wie in einem Cache gespeichert, und wobei das zweite Modell für maschinelles Lernen anhand der vorherigen Abfragen inkrementell trainiert wird, während sie zwischengespeichert werden.

8. Verfahren nach einem der vorhergehenden Ansprüche, wobei der Schritt des Bereitstellens einer Antwort von einem zweiten Modell für maschinelles Lernen anstelle des ersten Modells für maschinelles Lernen ferner in Reaktion darauf durchgeführt wird, dass:
eine Schätzung eines zweiten Datenextraktionsgrads über einem zweiten Schwellendatenextraktionsgrad liegt; oder
eine zweite Schätzung einer Wahrscheinlichkeit, dass der Benutzer der API tatsächlich ein Gegner ist, über einer zweiten Wahrscheinlichkeitsschwelle liegt.

9. Verfahren nach einem der vorhergehenden Ansprüche, wobei das zweite Modell für maschinelles Lernen mit dem ersten Modell für maschinelles Lernen bereitgestellt wird.

10. Verfahren nach Anspruch 5 oder 8, wobei der Datenextraktionsgrad ein Maß für eine Merkmalsraumabdeckung vorheriger Abfragen ist, die von dem Benutzer an die API übermittelt werden.

11. Verfahren nach einem der vorhergehenden Ansprüche, wobei das zweite Modell für maschinelles Lernen Ausgaben einer geringeren Genauigkeit erzeugt als das erste Modell für maschinelles Lernen.

12. Verfahren nach einem der vorhergehenden Ansprüche, wobei der erste Datensatz vertrauliche Trainingsdaten umfasst, die in dem zweiten Datensatz nicht umfasst sind.

13. Verfahren nach einem der vorhergehenden Ansprüche, wobei das Verfahren zur Verwendung bei der Handhabung eines vermuteten Extraktionsangriffs durch den potenziellen Gegner ist.

14. Vorrichtung zur Verwendung beim Schutz eines ersten Modells für maschinelles Lernen, das über eine Anwendungsprogrammierschnittstelle, API, abfragbar ist, vor einem Gegner, der das erste Modell für maschinelles Lernen über die API abfragt, um eine Datenbank mit Abfrage-Antwort-Paaren aufzubauen, wobei die Vorrichtung Folgendes umfasst:
einen Speicher, der Anweisungsdaten speichert, die einen Satz von Anweisungen darstellen;
einen Prozessor, der dazu ausgelegt ist, mit dem Speicher zu kommunizieren und den Satz von Anweisungen auszuführen, wobei der Satz von Anweisungen bei Ausführung durch den Prozessor die Vorrichtung zu Folgendem veranlasst:
Identifizieren eines Benutzers der API als potenziellen Gegner; und
in Reaktion auf eine Abfrage von dem potenziellen Gegner über die API Bereitstellen einer Antwort von einem zweiten Modell für maschinelles Lernen anstelle des ersten Modells für maschinelles Lernen, wobei das erste Modell für maschinelles Lernen anhand eines ersten Datensatzes trainiert wurde und wobei das zweite Modell für maschinelles Lernen anhand eines zweiten Datensatzes trainiert wurde, der sich von dem ersten Datensatz unterscheidet, wobei der zweite Datensatz zwischengespeicherte Abfrage-Antwort-Paare aus vorherigen Abfragen umfasst, die von dem potenziellen Gegner über die API angefordert wurden, wie in einem Cache gespeichert.

15. Vorrichtung (100) nach Anspruch 14, wobei der Prozessor (102) zum Durchführen des Verfahrens nach einem der Ansprüche 2 bis 13 ausgelegt ist.

## Revendications

1. Procédé mis en œuvre par ordinateur destiné à être utilisé dans la protection d'un premier modèle d'apprentissage automatique qui est interrogeable sur une interface de programmation d'application, API, contre un adversaire interrogeant le premier modèle d'apprentissage automatique par l'intermédiaire de l'API afin d'élaborer une base de données de paires interrogation-réponse, le procédé comprenant :
l'identification (202) d'un utilisateur de l'API comme adversaire potentiel ; et
en réponse à une interrogation de l'adversaire potentiel, par l'intermédiaire de l'API, la fourniture (204) d'une réponse d'un deuxième modèle d'apprentissage automatique au lieu du premier modèle d'apprentissage automatique, dans lequel le premier modèle d'apprentissage automatique a été entraîné sur un premier ensemble de données et dans lequel le deuxième modèle d'apprentissage automatique a été entraîné sur un deuxième ensemble de données qui est différent du premier ensemble de données,
dans lequel le deuxième ensemble de données comprend des paires interrogation-réponse en cache d'interrogations précédentes formulées par l'adversaire potentiel par l'intermédiaire de l'API, telles que stockées dans une cache.

2. Procédé selon la revendication 1, dans lequel le deuxième ensemble de données est complété par :
des données d'entraînement du premier ensemble de données qui sont en moyenne de qualité inférieure à la qualité moyenne du premier ensemble de données dans sa totalité ;
des données d'entraînement du premier ensemble de données qui ne sont pas confidentielles ; et/ou
des données d'entraînement qui sont disponibles publiquement.

3. Procédé selon la revendication 1, dans lequel le deuxième ensemble de données comprend un sous-ensemble des données dans le premier ensemble de données, et facultativement
dans lequel le sous-ensemble des données dans le premier ensemble de données comprend :
des données d'entraînement du premier ensemble de données qui sont en moyenne de qualité inférieure à la qualité moyenne du premier ensemble de données dans sa totalité ; et/ou
des données d'entraînement du premier ensemble de données qui sont en moyenne moins confidentielles que le niveau moyen de confidentialité du premier ensemble de données dans sa totalité.

4. Procédé selon l'une quelconque des revendications précédentes, dans lequel le deuxième modèle d'apprentissage automatique :
présente une architecture différente du premier modèle d'apprentissage automatique ; ou
présente un type de modèle différent du premier modèle d'apprentissage automatique.

5. Procédé selon l'une quelconque des revendications précédentes, comprenant en outre :
en réponse à l'identification de l'utilisateur de l'API comme adversaire potentiel, l'entraînement du deuxième modèle d'apprentissage automatique sur le deuxième ensemble de données et, facultativement, dans lequel le deuxième modèle d'apprentissage automatique est entraîné en réponse à :
une estimation qu'un premier niveau d'extraction de données est supérieur à un seuil de premier niveau d'extraction de données ; ou
une estimation qu'une première vraisemblance que l'utilisateur de l'API soit effectivement un adversaire est supérieure à un seuil de première vraisemblance.

6. Procédé selon la revendication 5, comprenant en outre :
en réponse à une interrogation de l'adversaire potentiel par l'intermédiaire de l'API, la fourniture d'une réponse d'un troisième modèle d'apprentissage automatique au lieu du premier modèle d'apprentissage automatique, pendant que le deuxième modèle d'apprentissage automatique est en cours d'entraînement.

7. Procédé selon la revendication 5 ou 6, dans lequel le deuxième ensemble de données comprend des paires interrogation-réponse d'interrogations précédentes formulées par l'adversaire potentiel par l'intermédiaire de l'API, telles que stockées dans une cache, et dans lequel le deuxième modèle d'apprentissage automatique est entraîné de manière incrémentielle sur les interrogations précédentes au fur et à mesure de leur mise en cache.

8. Procédé selon l'une quelconque des revendications précédentes, dans lequel l'étape de fourniture d'une réponse d'un deuxième modèle d'apprentissage automatique au lieu du premier modèle d'apprentissage automatique est en outre réalisée en réponse à :
une estimation qu'un deuxième niveau d'extraction de données est supérieur à un seuil de deuxième niveau d'extraction de données ; ou
une estimation qu'une deuxième vraisemblance que l'utilisateur de l'API soit effectivement un adversaire est supérieure à un seuil de deuxième vraisemblance.

9. Procédé selon l'une quelconque des revendications précédentes, dans lequel le deuxième modèle d'apprentissage automatique est déployé avec le premier modèle d'apprentissage automatique.

10. Procédé selon la revendication 5 ou 8, dans lequel le niveau d'extraction de données est une mesure d'une couverture d'espace de caractéristiques d'interrogations précédentes soumises par l'utilisateur à l'API.

11. Procédé selon l'une quelconque des revendications précédentes, dans lequel le deuxième modèle d'apprentissage automatique produit des sorties de précision inférieure au premier modèle d'apprentissage automatique.

12. Procédé selon l'une quelconque des revendications précédentes, dans lequel le premier ensemble de données comprend des données d'entraînement confidentielles qui ne sont pas comprises dans le deuxième ensemble de données.

13. Procédé selon l'une quelconque des revendications précédentes, dans lequel le procédé est destiné à être utilisé dans la gestion d'une attaque d'extraction suspectée de l'adversaire potentiel.

14. Appareil destiné à être utilisé dans la protection d'un premier modèle d'apprentissage automatique qui est interrogeable sur une interface de programmation d'application, API, contre un adversaire interrogeant le premier modèle d'apprentissage automatique par l'intermédiaire de l'API afin d'élaborer une base de données de paires interrogation-réponse, l'appareil comprenant :
une mémoire comprenant des données d'instructions représentant un ensemble d'instructions ; et
un processeur configuré pour communiquer avec la mémoire et pour exécuter l'ensemble d'instructions, dans lequel l'ensemble d'instructions, lorsqu'il est exécuté par le processeur, amène l'appareil à :
identifier un utilisateur de l'API comme adversaire potentiel ; et
en réponse à une interrogation de l'adversaire potentiel, par l'intermédiaire de l'API, fournir une réponse d'un deuxième modèle d'apprentissage automatique au lieu du premier modèle d'apprentissage automatique, dans lequel le premier modèle d'apprentissage automatique a été entraîné sur un premier ensemble de données et dans lequel le deuxième modèle d'apprentissage automatique a été entraîné sur un deuxième ensemble de données qui est différent du premier ensemble de données, et dans lequel le deuxième ensemble de données comprend des paires interrogation-réponse en cache d'interrogations précédentes formulées par l'adversaire potentiel par l'intermédiaire de l'API, telles que stockées dans une cache.

15. Appareil (100) selon la revendication 14, dans lequel le processeur (102) est configuré pour réaliser le procédé selon l'une quelconque des revendications 2 à 13.
